# EUROPÄISCHE PATENTSCHRIFT

(11) **EP 3 180 472 B1**
(45) Veröffentlichungstag und Bekanntmachung des Hinweises auf die Patenterteilung: **21.03.2018**
(21) Anmeldenummer: 16782187.5
(22) Anmeldetag: 17.10.2016
(51) Int. Cl.: D07B 1/14, B66C 15/00, B66D 1/54, B66B 7/12

(54) **VORRICHTUNG ZUR ERKENNUNG DER ABLEGEREIFE EINES HOCHFESTEN FASERSEILS FÜR HEBEZEUGE**
DEVICE FOR DETECTING THE REPLACEMENT STATE OF WEAR OF A HIGH-STRENGTH FIBRE CABLE FOR HOISTING DEVICES
DISPOSITIF DE DÉTECTION D'UN ÉTAT D'USURE LIMITE D'UN CÂBLE DE FIBRES À HAUTE RÉSISTANCE POUR ENGINS DE LEVAGE

(30) Priorität: 21.10.2015 DE 102015013604
(43) Veröffentlichungstag der Anmeldung: 21.06.2017
(73) Patentinhaber: Liebherr-Components Biberach GmbH, 88400 Biberach an der Riß (DE)
(72) Erfinder: Dr. MUPENDE, Ilaka, 89231 Neu-Ulm (DE); Dr. HAMME, Ulrich, 89584 Ehingen (DE); WILLIM, Hans-Dieter, 89079 Ulm (DE)
(74) Vertreter: Thoma, Michael
(86) Internationale Anmeldenummer: PCT/EP2016/001716
(87) Internationale Veröffentlichungsnummer: WO 2017/067651

(56) Entgegenhaltungen:
- WO-A1-2012/010431
- DE-U1-202009 014 031

## Beschreibung

Die vorliegende Erfindung betrifft eine Vorrichtung zum Erkennen der Ablegereife eines hochfesten Faserseils für Hebezeuge wie Krane, sowie ein Hebezeug wie einen Kran, in dem ein solches hochfestes Faserseil eingebaut ist.

Seit geraumer Zeit wird in der Hebetechnik und insbesondere bei Kranen versucht, die üblichen, schweren Stahlseile durch hochfeste Faserseile zu ersetzen, die aus hochfesten Kunstfasern wie beispielsweise. Aramidfasern (HMPA), Aramid-/Kohlefasergemischen, hochmodularen Polyethylenfasern (HMPE), oder Poly(p-phenylene-2,6-benzobisoxazole)-Fasern (PBO) bestehen oder zumindest derartige Fasern aufweisen. Durch die Gewichtsersparnis gegenüber Stahlseilen von bis zu 80% bei annähernd gleicher Bruchfestigkeit kann die Traglast bzw. die zulässige Hublast erhöht werden, da das für die Traglast zu berücksichtigende Eigengewicht des Seils deutlich geringer ist. Gerade bei Kranen mit großer Hubhöhe, oder in Auslegern oder Mastverstellwerken mit Flaschenzügen hoher Einscherungszahl kommen beträchtliche Seillängen und damit auch ein entsprechendes Seilgewicht zustande, sodass die durch hochfeste Faserseile mögliche Gewichtsreduzierung sehr vorteilhaft ist. Zusätzlich zum Gewichtsvorteil des Faserseiles selbst kommt hinzu, dass die Verwendung von Faserseilen auch eine Gewichtsersparnis bei weiteren Komponenten ermöglicht. Beispielsweise kann der Lasthaken leichter ausgeführt werden, da zur Seilspannung eines Faserseils weniger Lasthakengewicht notwendig ist. Zum anderen erlaubt die gute Biegsamkeit von Synthetikfaserseilen kleinere Biegeradien und damit kleinere Seilscheiben bzw. - rollen am Kran, was zu einer weiteren Gewichtsreduzierung insbesondere im Bereich von Kranauslegern führt, sodass bei großen Kranausladungen eine erhebliche Lastmomentsteigerung erreicht werden kann.

Zusätzlich zu den genannten Gewichtsvorteilen zeichnen sich Seiltriebe mit Kunstfaserseilen durch eine beträchtlich größere Lebensdauer, leichtes Hantieren und gute Biegsamkeit sowie die nicht mehr notwendige Seilschmierung aus. Insgesamt kann hierdurch eine größere Geräteverfügbarkeit erzielt werden.

Eine Schwierigkeit bei solchen hochfesten Faserseilen besteht jedoch darin, deren Ablegereife präzise und verlässlich vorherzusagen bzw. zu bestimmen. Hochfeste Faserseile sind wie Stahlseile Verschleißteile, die ausgetauscht werden müssen, wenn sich ihr Zustand soweit verschlechtert hat, dass bei weiterem Betrieb die erforderliche Sicherheit nicht mehr gegeben ist. Diesen Zustand bezeichnet man allgemein als Ablegereife.

Bei herkömmlichen Stahlseilen ist die Ablegereife in an sich recht einfacher Weise durch Inaugenscheinnahme des Seilzustandes ermittelbar, wobei die Vorgehensweise bei der Prüfung und der Prüfungsumfang in der Norm ISO 4309 vorgegeben wird. Im Wesentlichen wird dabei auf die Anzahl der Drahtbrüche über eine bestimmte Messlänge des Seiles, eine Verringerung des Seildurchmessers sowie auf Litzenbrüche abgestellt. Diese Messmethode ist jedoch zur Erkennung der Ablegereife bei hochfesten Faserseilen nicht möglich, da sich die verwendeten Synthetikfasern nicht so verhalten wie Drahtlitzen. Insbesondere kommt es bei hochfesten Faserseilen oft zu einem schlagartigen Versagen bzw. einem Eintreten der Ablegereife ohne nach und nach erkennbare Vorschädigungen, da anders als bei Stahlseilen oftmals nicht einzelne Fasern nach und nach reißen und aufspleißen, sondern oft gleichzeitig mehrere Faserstränge versagen.

Aus der Schrift DE 20 2009 014 031 U1 ist ein hochfestes Faserseil aus Synthetikfasern bekannt, bei dem ein Seilkern mit einer Ummantelung versehen wird, die anders eingefärbt ist als der Seilkern und selbst wiederum verschiedene Mantelschichten unterschiedlicher Farbe besitzt. Durch diese verschiedenfarbige Einfärbung soll es leichter erkennbar sein, wenn durch Abrieb einer äußeren Schicht eine andersfarbige, darunterliegende Schicht oder gar der Seilkern zum Vorschein kommt. In der Praxis leidet diese an sich sinnvolle Farbindikatorfunktion jedoch daran, dass die Ummantelung aufgrund der Eigenschaften hochfester Synthetikfasern dazu neigt, insgesamt recht schlagartig zu versagen, sodass es wiederum schwierig ist, die Ablegereife des Seils rechtzeitig zu bestimmen oder vorhersagen zu können. Aus der Schrift WO 2012/010431 A1 ist eine Vorrichtung zum Erkennen der Ablegereife eines hochfesten Faserseils bekannt, wobei das Seil einen Seilkern, der hochfeste Kunststofffasern oder -litzen umfasst sowie eine den Seilkern umgebende, verschleißanzeigende Ummantelung besitzt.

Der vorliegenden Erfindung liegt daher die Aufgabe zugrunde, eine verbesserte Vorrichtung zum Bestimmen der Ablegereife eines hochfesten Faserseils, sowie ein verbessertes Hebezeug mit einem solchen Faserseil zu schaffen, die Nachteile des Standes der Technik vermeiden und letzteren in vorteilhafter Weise weiterbilden. Insbesondere soll eine einfache, gleichwohl verlässliche und präzise Bestimmung der Ablegereife und damit eine möglichst lange Einsatzzeit ermöglicht werden, ohne hierbei die Sicherheit des Faserseils zu beeinträchtigen.

Die genannte Aufgabe wird durch eine Vorrichtung zum Bestimmen der Ablegereife eines solchen Faserseils gemäß Anspruch 1, sowie ein Hebezeug mit einer solchen Vorrichtung gemäß Anspruch 15 gelöst. Bevorzugte Ausgestaltungen der Erfindung sind Gegenstand der abhängigen Ansprüche.

Um den jeweiligen Schädigungsgrad der Ummantelung und damit die Nähe zur bevorstehenden Ablegereife des Seils leichter bestimmen zu können, ist nach einem Aspekt der vorliegenden Erfindung eine Vorrichtung zum Erkennen der Ablegereife eines solchen hochfesten Faserseils mit einem Referenzschädigungsspeicher versehen, in dem Referenzdarstellungen des Seils in verschiedenen Schädigungsgraden der Ummantelung des Seils enthalten sind, anhand derer durch einen optischen Vergleich eines ist-Bild des Seils mit den genannten Referenzdarstellungen der jeweilige Schädigungs- und/oder Verschleißgrad der Ummantelung bestimmbar ist, anhand dessen dann die Ablegereife bestimmbar ist. Anhand solcher Referenzdarstellungen, die das Seil in verschiedenen Schädigungszuständen oder -graden zeigen, kann die Einordnung einer jeweiligen IST-Schädigung in eine bestimmte Schadensklasse bzw. die Zuordnung der IST-Schädigung zu einem Schädigungsgrad deutlich erleichtert werden, das heißt es ist deutlich leichter bestimmbar, ob es sich um eine kleinere, eine mittlere oder eine größere Schädigung handelt, beispielsweise im Sinne einer 20%-Schädigung, 50%-Schädigung oder 75%-Schädigung.

Liegen in einem bestimmten Seilprüfabschnitt mehrere Schädigungen vor, können diese einzeln einem bestimmten Schädigungsgrad zugeordnet werden, wobei vorteilhafterweise ein Aufsummieren der einzelnen Schädigungen zu einem Gesamtschädigungsgrad erfolgen kann, beispielsweise dergestalt, dass zwei 25%-Schädigungen und eine 40%-Schädigung zu einem Gesamtschädigungsgrad von 90% führen. Bei Erreichen eines vorbestimmten Gesamtschädigungsgrades, beispielsweise 100%, kann die Ablegereife bestimmt werden.

Die genannte Bestimmung der Ablegereife anhand gespeicherter Referenzdarstellungen des Seils in unterschiedlichen Schädigungsgraden und eines optischen Vergleichs des Ist-Bilds des Seils mit den genannten Referenzdarstellungen kann in einfachster Ausführung der Erfindung manuell durch eine von einer sachkundigen Person wie beispielsweise dem Kranführer durchgeführte Sichtprüfung sein, der die aufgetretenen Schäden einkategorisieren, schriftlich festhalten und aufsummieren kann, um dann ggfs. die Ablegereife zu bestimmen oder einen Sachverständigen hinzuzuziehen.

In vorteilhafter Weiterbildung der Erfindung können die genannten Prüfschritte jedoch auch automatisiert mit entsprechenden Vorrichtungskomponenten durchgeführt werden. Beispielsweise kann mittels einer optischen Erfassungseinrichtung, beispielsweise einer Kamera ein Ist-Bild des Seils erfasst werden, welches dann mittels einer automatischen oder halbautomatischen Bildauswerteeinrichtung, ggfs. mit zusätzlicher Kontrolle durch eine sachkundige Person, optisch mit den in einem Referenzbildspeicher gespeicherten Referenzdarstellungen verglichen wird, um im Ist-Bild zu sehende Schädigungen zu erfassen und einzukategorisieren. Eine Auswerteeinrichtung kann dann die einzelnen Schädigungen in der genannten Weise aufsummieren und ggfs. eine Ablegereifesignal abgeben. Die genannte Vorrichtung zum Erkennen der Ablegereife kann in ein Hebezeug, insbesondere in einen Kran und dessen Kransteuerung integriert sein.

Beispielsweise kann die Ummantelung des Seilkerns derart ausgebildet sein, dass Schädigungen der Ummantelung nicht überall gleichzeitig, sondern partiell sowie nach und nach eintreten, anhand derer graduell verschiedene Schädigungsstufen und Verschleißzustände bestimmbar sind. Die Ummantelung kann beispielsweise einen Faseraufbau aus verschiedenartigen Synthetikfasern besitzen, die unterschiedliche Verschleißfestigkeiten besitzen und somit auch bei an sich gleichmäßiger Beaufschlagung mit verschleißfördernden Einflüssen nicht alle gleichzeitig Schädigungen zeigen, sondern nach und nach verschleißen. Beispielsweise besitzt die Ummantelung zumindest eine Mantelschicht, in der Kunststofffasern unterschiedlicher Abrieb- und/oder Zugfestigkeit und/oder Biegewechselstandfestigkeit miteinander verflochten sind. Die unterschiedlichen Abrieb- und/oder Zugfestigkeiten und/oder Biegewechselstandfestigkeit der in einer Mantelschicht verwendeten Kunststofffasern gewährleistet, dass Schädigungen der Mantelschicht nur partiell und nach und nach eintreten, sodass anhand der nach und nach zunehmenden Schädigungsstellen verschiedene Verschleißzustände des Seils und der damit einhergehende, noch verbleibende Abstand zur Ablegereife graduell bestimmbar und quantifizierbar sind.

Vorteilhafterweise können die in einer Mantelschicht miteinander verwobenen Kunststofffasern aus verschiedenen Werkstoffen bestehen. Beispielsweise können in einer Mantelschicht HMPE-Fasern und Polyesterfasern miteinander verflochten sein. Alternativ oder zusätzlich können auch weitere der eingangs genannten Fasern wie beispielsweise PBO-Fasern und/oder Aramid-Kohlefasermisch-Fasern miteinander verflochten bzw. in die vorgenannte Mantelschicht mit eingeflochten sein.

Alternativ oder zusätzlich zu Kunststofffasern unterschiedlicher Abriebs- und/oder Zugfestigkeit und/oder unterschiedlicher Werkstoffe in einer Mantelschicht kann die Ummantelung des Faserseils auch mehrere Mantelschichten aufweisen, wobei sich die Fasern hinsichtlich Abriebs- und/oder Zugfestigkeit und/oder Biegewechselstandfestigkeit von Schicht zu Schicht verändern. Insbesondere können mehrere Mantelschichten vorgesehen sein, die sich hinsichtlich ihres Faseraufbaus und den Abriebs- und/oder Zugfestigkeiten und/oder Biegewechselstandfestigkeit der in den Mantelschichten verwendeten Synthetikfasern voneinander unterscheiden.

Beispielsweise können in einer ersten Mantelschicht Kunststofffasern vorgesehen sein, die sich hinsichtlich ihrer Abriebs-, Biegelwechsel- und/oder Zugfestigkeit von allen Kunststofffasern in einer zweiten Mantelschicht unterscheiden. Vorteilhafterweise können auch in jeder Mantelschicht Kunststofffasern einer bestimmten Abriebs- und/oder Zugfestigkeit vorgesehen sein, die in keiner anderen Mantelschicht vorgesehen sind, sodass jede Mantelschicht eine charakteristische Festigkeit gegenüber Abrieb und Bruchschädigungen zeigt, die in jeder Mantelschicht zu einem anderen partiellen Schädigungsbild führen. Dies macht es leicht, immer tiefergehende Schädigungen voneinander in einfacher Weise zu unterscheiden.

Die in den verschiedenen Mantelflächen verwendeten Synthetikfasern können auch aus unterschiedlichen Werkstoffen bestehen, beispielsweise dergestalt, dass in einer ersten Mantelschicht Kunststofffasern eines Werkstoffs vorgesehen sind, die nicht in einer zweiten Mantelschicht vorhanden sind. Alternativ oder zusätzlich können auch umgekehrt in der zweiten Mantelschicht Kunststofffasern aus einem Werkstoff vorgesehen sein, der in der ersten Mantelschicht fehlt.

Alternativ oder zusätzlich zu von Schicht zu Schicht verschiedenen Fasern können die Mantelschichten der Ummantelung auch unterschiedliche Schichtdicken besitzen und/oder es können von Schicht zu Schicht unterschiedlich dicke Kunststofffasern und/oder -litzen vorgesehen sein. Durch die Verwendung unterschiedlicher dicker Kunststofffasern können von Schicht zu Schicht unterschiedliche Schädigungsbilder erzielt werden. Auch durch die Verwendung unterschiedlich großer Schichtdicken, die beispielsweise von außen nach innen zunehmen können, kann sichergestellt werden, dass immer tiefer gehende Schädigungen immer schwerer auftreten und zunächst nur leichtere Schädigungen, die von der Ablegereife noch relativ weit entfernt sind, zunächst an der Außenschicht auftreten und damit leicht erkennbar sind.

Die Verwendung von Kunststofffasern unterschiedlicher Faserdicke und/oder unterschiedlicher Litzendicke kann auch in einer Mantelschicht sinnvoll sein, um in einer Mantelschicht partiell unterschiedliche Schädigungsbilder zu erzielen.

Um eine leichte Erkennbarkeit der verschiedenen Schädigungen auch bei nur kleineren Ausmaßen der Schädigungen leicht zu ermöglichen, können die Kunststofffasern, die unterschiedliche Abrieb-, Biegewechsel- und/oder Zugfestigkeiten besitzen und/oder aus unterschiedlichen Werkstoffen bestehen, in unterschiedlichen Farben eingefärbt sein. Alternativ oder zusätzlich können auch von Mantelschicht zu Mantelschicht unterschiedliche Farben Verwendung finden bzw. verschiedene Mantelschichten verschiedenfarbig eingefärbt sein. Hierdurch wird die optische Erfassung von Schädigungen der Ummantelung deutlich erleichtert, da bei Verschleißen einer äußeren Mantelschicht die darunterliegende Mantelschicht in anderer Farbe sichtbar wird.

Insbesondere kann auch der Seilkern eine andere Farbe besitzen als die Ummantelung, insbesondere eine andere Farbe als die unterste bzw. innerste Mantelschicht der Ummantelung, sodass spätestens bei einem vollständigen Verschleißen der Ummantelung die andere Farbe des Seilkerns sichtbar wird.

Die genannte Bildauswerteeinrichtung kann zur Erfassung der Schädigungsmuster grundsätzlich verschieden ausgebildet sein. Um beispielsweise ein Aufspleißen des Verschleißmantels und damit einhergehende Verdickungen und Verdünnungen in der Seilkontur zu erfassen, kann die Bildauswerteeinrichtung Konturauswertemittel umfassen, die anhand eines Bildvergleichs Seilverdickungen durch Aufspleißungen des Verschleißmantels und/oder Verdünnungen in Bereichen, in denen der Seilmantel verschlissen ist und/oder fehlt, und/oder andere Konturveränderungen wie Wellungen, die gegenüber dem Sollzustand der Seilkontur auftreten, bestimmen können.

Hierbei muß nicht zwangsweise ein Bildvergleich zu einem Referenzbild erfolgen, sondern es kann auch aus einem bestimmten Konturverlauf per se, beispielsweise besonderen Unregelmäßigkeiten wie Ausbeulungen oder Einbuchtungen oder Wellungen auf eine Schädigung geschlossen werden, die eine Ablegereife signalisiert. Dies beruht auf dem Gedanken, dass ein ungeschädigtes Seil einen gleichmäßigen Konturverlauf besitzt und insofern Unregelmäßigkeiten wie Wellungen als Indiz für eine Schädigungn des Mantels angesehen werden können

Alternativ oder zusätzlich kann die Bildauswerteeinrichtung Farbmuster-Auswertemittel umfassen, die anhand eines Bildvergleichs Veränderungen des Farbmusters, das das Seil im aufgenommenen Bild zeigt, bestimmen kann. Insbesondere kann ein solches Farbmuster die Abfolge vorbestimmter Farben und/oder ein Anordnungsmuster vorbestimmter Farben meinen, beispielsweise dahingehend, dass entlang des Seiles wechselweise rote, weiße und grüne Streifen oder ein Schachbrettmuster vorliegen, wenn das Seil unverletzt ist. Verändert sich diese Soll-Farbfolge beispielsweise durch Verschwinden der weißen Streifen in ein rot-grünes Streifenmuster, können die genannten Farbmuster-Auswertemittel anhand einer solchen Abweichung eine Seilschädigung bestimmen. Dabei kann auch ein entsprechendes Graustufenmuster im Sinne eines Farbmusters angesehen werden, beispielsweise dahingehend, dass ein hellgrau-/dunkelgraues Schachbrettmuster vorgesehen ist oder entlang des Seiles abwechselnd schwarze, anthrazitfarbene und hellgraue Streifen angeordnet sind und von der Bildauswerteeinrichtung erfasst und ausgewertet werden. Verschwinden beispielsweise die anthrazitfarbenen Streifen, so dass das Graustufenmuster zu einem Schwarzweißmuster wird, kann dies die genannte Farbmuster-Auswerteeinrichtung erkennen und als Seilschädigung interpretieren. Schwarz, weiß und Zwischenstufen wie grau können also auch als Farben angesehen werden.

Alternativ oder zusätzlich kann die genannte Bildauswerteeinrichtung auch Farbflächenanteil-Auswertemittel umfassen, die in einem erfassten Bild des Seils den Flächenanteil einer jeweiligen Farbe bestimmen können, den die Farbe in der Gesamtfläche des Seils einnimmt. Ist beispielsweise der Verschleißmantel des Seils wie bei dem zuvor beschriebenen Beispiel rot-weiß-grün gestreift, wobei die Streifenbreiten gleich groß sind, so dass jede Farbe ein Drittel der Gesamtfläche einnimmt, können die genannten Farbflächenanteil-Auswertemittel ein Verschleißen der weißen Fasern oder Litzen und eine damit einhergehende Schädigung des Seils bestimmen, wenn der Flächenanteil der genannten weißen Fasern bzw. Litzen vom Sollwert 33% auf beispielsweise weniger als 25% oder weniger als 15% abnimmt.

Die genannten Farbflächenanteil-Auswertemittel können ggf. auch das Auftreten einer neuen Farbe und deren Flächenanteil bestimmen. Tritt beispielsweise der andersfarbige Seilkern durch Verschleißen des Verschleißmantels zutage, können beispielsweise schwarze Flecken in dem vorgenannten rot-weiß-grünen Farbmuster auftreten, so dass die Farbflächenanteil-Auswertemittel eine Schädigung bestimmen können, wenn der Flächenanteil der schwarzen Flecken ein vorbestimmtes Maß überschreitet.

Alternativ oder zusätzlich kann die Bildauswerteeinrichtung Oberflächenstrukturmuster-Auswertemittel umfassen, die anhand eines Bildvergleichs Veränderungen des Oberflächenstrukturmusters, das das Seil im aufgenommenen Bild zeigt, bestimmen kann. Insbesondere kann ein solches Oberflächenstrukturmuster die Abfolge vorbestimmter Strukturierungen und/oder ein Anordnungsmuster vorbestimmter Strukturelemente meinen, beispielsweise dahingehend, dass entlang des Seiles wechselweise grobfaserige, linear verlaufende Faserstränge und feinfaserige verdrehte Faserstränge vorliegen, wenn das Seil unverletzt ist. Verändert sich diese Soll-Oberflächenstrukturfolge beispielsweise durch Verschwinden der feinfaserigen Stränge, können die genannten Oberflächenstrukturmuster-Auswertemittel anhand einer solchen Abweichung eine Seilschädigung bestimmen.

Die vorgenannte Bildauswerteeinrichtung kann in vorteilhafter Weiterbildung der Erfindung auch Dehnungsauswertemittel umfassen, die eine Dehnung des hochfesten Faserseils und/oder dessen Verschleißmantels anhand eines Vergleichs des aktuellen Seilbilds mit einem gespeicherten Referenzbild bestimmen können. Insbesondere können die genannten Dehnungsauswertemittel die Beabstandung vorbestimmer Farbmuster- und/oder Pixelmusterstellen in Längsrichtung des Faserseils voneinander und/oder in Querrichtung des Faserseils voneinander identifizieren und bestimmen und mit einem Sollwert, der aus dem Bild des Faserseils im Ursprungszustand oder Sollzustand bestimmt werden kann, vergleichen, um eine Dehnung des Seils in Längsrichtung und/oder Querrichtung bestimmen zu können.

Ist beispielsweise das Seil, insbesondere dessen Verschleißmantel, mit roten oder andersfarbigen Litzen versehen, die beispielsweise spiralförmig im Mantel eingearbeitet sein können, haben diese roten Fasern bzw. Litzen im Bild des Faserseils einen vorbestimmten Abstand voneinander. Erfährt das Seil durch Alterung und/oder Schädigung eine übermäßige Dehnung, schlägt sich dies in einer entsprechenden Abstandsvergrößerung der roten Streifen nieder, anhand derer die Ablegereife bzw. Schädigung erkannt werden kann.

Die Erfassungseinrichtung zum Erfassen des Ist-Zustandes des hochfesten Faserseils kann auch eine Sensorik zum sensorischen Erfassen des Ist-Zustandes des Seilkerns und/oder des Seilmantels aufweisen, um ggf. alternativ oder zusätzlich zur optischen Erfassung des Zustands des Verschleißmantels den Ist-Zustand des Seilkerns und/oder des Seilmantels in anderer Weise erfassen zu können. Diese Sensorik kann grundsätzlich in verschiedener Weise arbeiten und ggf. mehrere Parameter des Seilkerns und/oder des Seilmantels bestimmen, um bei vorbestimmten Veränderungen eines oder mehrerer Seilkern- und/oder Seilmantel-Parameter eine Schädigung anzunehmen.

Beispielsweise kann die genannte Sensorik einen optischen Reflexionssensor aufweisen, der anhand der Reflexionen des Verschleißmantels und/oder des Seilkerns und/oder vorbestimmter Seilschichten die Beschaffenheit des Verschleißmantels und/oder des Seilkerns und/oder der Seilschicht bestimmen kann. Beispielsweise kann der Verschleißmantel und/oder der Seilkern und/oder eine bestimmte Seilschicht mit einer Reflexionsschicht versehen sein, die ein Sensorsignal reflektiert, so dass bei unbeschädigtem Seil ein vorbestimmtes Reflexionssignal am Sensor ankommt bzw. aufgenommen wird.

Zeigt dieses Reflexionssignal übermäßige oder charakteristische Änderungen, kann von einer Seilschädigung ausgegangen werden. Wird beispielsweise der Verschleißmantel reflektierend beschichtet, kann von einer Seilschädigung ausgegangen werden, wenn das Reflexionssignal - bei verschlissenem Seilmantel - ausbleibt bzw. an einer ausreichenden Anzahl von Stellen ausbleibt. In ähnlicher Weise kann bei einer reflektierenden Beschichtung des Seilkerns davon ausgegangen werden, dass bei Auftreten eines Reflexionssignals der Verschleißmantel, der im unbeschädigten Zustand eine Reflexion verhindert, beschädigt ist.

Alternativ oder zusätzlich kann die genannte Sensorik auch einen Ultraschallsensor umfassen, der das hochfeste Faserseil mit Ultraschall beaufschlagt und das zurückgeworfene Signal erfasst. Mittels eines solchen Ultraschallsensors können auch tiefere Schichten des hochfesten Faserseils, insbesondere dessen Seilkern, ggf. aber auch dessen Verschleißmantel überwacht werden, da sich das Ultraschallsignal bei Seilschädigungen, insbesondere bei einem Verschleiß des Verschleißmantels verändert.

Alternativ oder zusätzlich zu einem solchen Ultraschallsensor kann auch ein Radarsensor vorgesehen sein, der das hochfeste Faserseil mit einem Radarsignal beaufschlagt und das zurückgeworfene Signal erfasst. Mittels eines solchen Radarsensors können auch tiefere Schichten des hochfesten Faserseils, insbesondere dessen Seilkern, ggf. aber auch der Verschleißmantel und deren Strukturen erfasst werden. Zeigen sich charakteristische Veränderungen des Radarasignals, kann von einer Schädigung des hochfesten Faserseils ausgegangen werden.

Alternativ oder zusätzlich kann die genannte Sensorik auch einen kapazitiv arbeitenden Sensor umfassen, der die dielektrischen Eigenschaften des Seilkerns und/oder des Verschleißmantels erfasst und deren Veränderungen bestimmen kann. Zeigen sich im Signal des kapazitiven Sensors vorbestimmte Änderungen, die auf entsprechende Änderungen der dielektrischen Eigenschaften des Seilkerns und/oder des Verschleißmantels rückschließen lassen, kann von einer Seilschädigung ausgegangen werden.

Die Erfindung wird nachfolgend anhand eines Ausführungsbeispiels und zugehöriger Zeichnungen näher erläutert. In den Zeichnungen zeigen:
- Fig. 1 bis Fig. 5:: jeweils eine Seitenansicht eines hochfesten Faserseils mit einer geflochtenen Ummantelung, wobei der an der Ummantelung auftretende Mantelverschleiß in unterschiedlichen Schädigungsgraden dargestellt ist und nach und nach der Seilkern zu Tage tritt,
- Fig. 6 bis Fig 9:: jeweils eine Draufsicht auf einen Abschnitt eines hochfesten Faserseils mit einer Ummantelung nach einer weiteren Ausführung der Erfindung, wobei hier als Schädigungen der Ummantelung Einschnitte am Seil in verschiedenen Ausprägungsstufen dargestellt sind,
- Fig. 10 bis Fig. 13:: jeweils einen Abschnitt eines hochfesten Faserseils mit einer Ummantelung nach einer weiteren Ausführung der Erfindung, wobei Schädigungen der Ummantelung in Form einer Quetschung des Seils in verschiedenen Ausprägungsstufen dargestellt ist,
- Fig. 14:: eine schematische Darstellung einer Vorrichtung zum Bestimmen der Ablegereife und deren Komponenten, die eine optische Erfassung der Dehnung des Faserseils und hieraus eine Bestimmung der Ablegereife vorsehen, und
- Fig. 15:: eine schematische Darstellung des zugrundeliegenden Zusammenhangs zwischen Seildehnung und Ablegereife, anhand derer die Vorrichtung aus Fig. 14 die Ablegereife bestimmt.

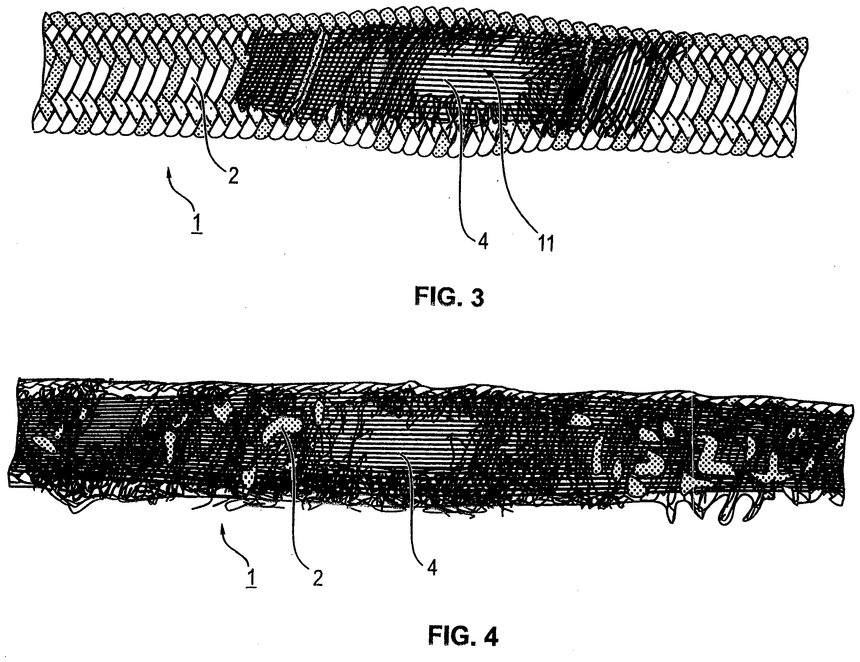

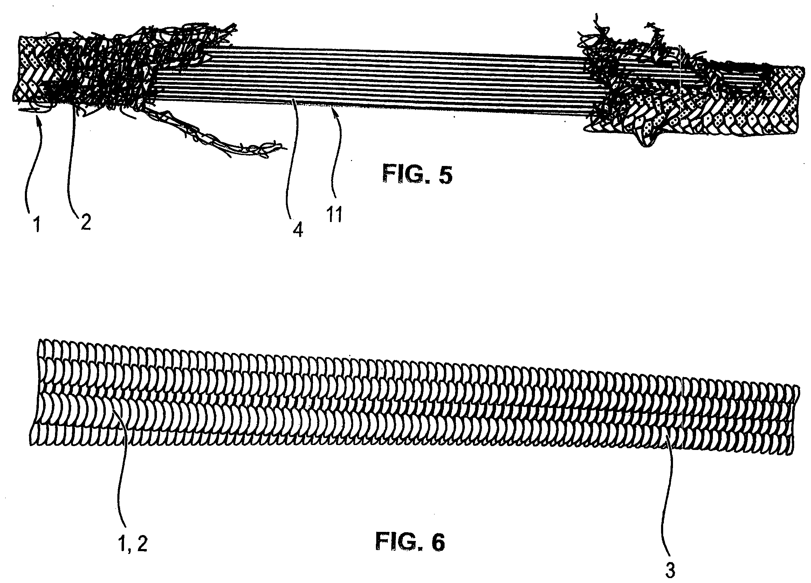

Wie beispielsweise die Figuren 4 und 5 zeigen, umfasst das hochfeste Faserseil einen Seilkern 11, der aus Litzen 4 geflochten oder geschlagen sein kann, die wiederum aus hochfesten Synthetikfasern bestehen oder zumindest solche hochfesten Synthetikfasern umfassen, beispielsweise HPMA-Fasern, HMPE-Fasern oder andere der eingangs genannten Fasertypen, wobei der genannte Seilkern 11 aus Fasern eines Fasertyps oder Fasern verschiedener Fasertypen bestehen kann.

Die Ummantelung 2 umgibt den genannten Seilkern 11 und kann unmittelbar auf dem genannten Seilkern sitzen oder ggfs. durch eine Zwischenschicht hiervon beabstandet sein. Die genannte Ummantelung 2 kann insbesondere den Außenmantel des Seils 1 bilden. Der Seilkern 11 kann die gesamte angegebene Tragfestigkeit des Seils 1 übernehmen. Die Ummantelung 2 wirkt nur darüberhinaus unterstützend, insbesondere als Schutz für den Seilkern 11 und als Verschleißindikator.

Die genannte Ummantelung 2 kann hierbei aus einer einzigen Mantelschicht bestehen oder auch mehrere Mantelschichten umfassen, die übereinanderliegend angeordnet sind.

Wie die Figuren zeigen, umfasst die genannte Ummantelung 2 Litzen 3, die miteinander zu der Ummantelung 2 geflochten sind und jeweils aus hochfesten Synthetikfasern bestehen können oder solche hochfesten Synthetikfasern zumindest aufweisen können.

Insbesondere können die genannten Litzen 3 der Ummantelung 2 in der eingangs ausführlich beschriebenen Weise aus unterschiedlichen Kunstfasern verschiedener Abrieb- und/oder Zugfestigkeit und/oder unterschiedlicher Werkstoffe gebildet sein. Wie die Figuren zeigen, sind die genannten Litzen 3 vorteilhafterweise in verschiedenen Farben eingefärbt.

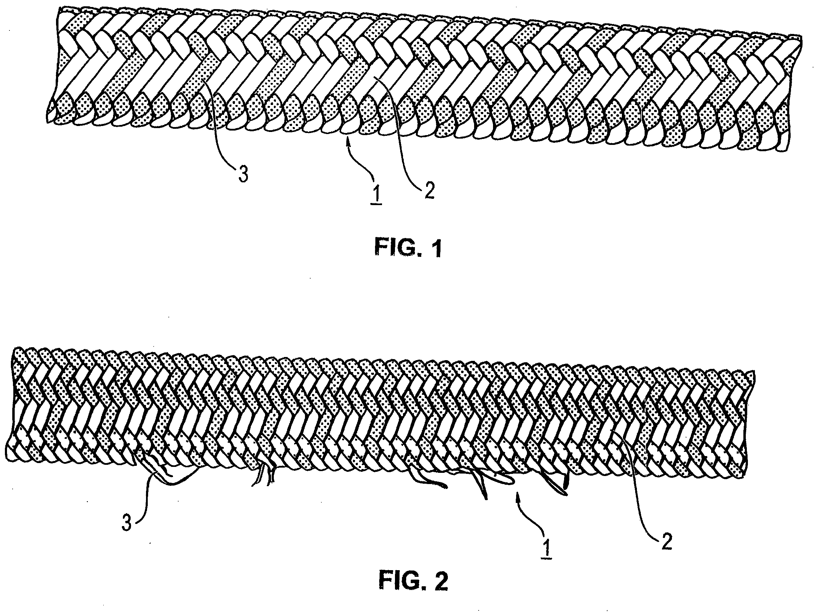

In den Figuren 1 bis 5 ist ein Mantelverschleiß der Ummantelung 2 dargestellt, der beispielsweise durch den Seiltrieb bedingt sein kann, insbesondere die Umlenkung des Seils um Seilrolle, die Biegewechsel im Seilverlauf, die Seilreibung auf der Trommel beim Spulen und auch die Beanspruchung bei einer mehrlagigen Aufwicklung auf der Trommel, bei der die Seilabschnitte einer oberen Lage zwischen die Seilabschnitte einer unteren Lage einzuschneiden drohen.

Fig.1 zeigt das Seil 1 mit Ummantelung 2 und die Litzen 3 der Ummantelung in unterschiedlichen Farben. Grad der gezeigten Schädigung ca. 5%.

Fig.2 zeigt das Seil 1 mit Ummantelung 2 jedoch mit sichtbarem Verschleiß der einzelnen Litzen 3 des Mantels. Grad der gezeigten Schädigung ca. 25%.

Fig.3 zeigt das Seil 1, dessen Ummantelung über einen Teilabschnitt von ca. 90° verschlissen ist und die Litzen 4 des tragenden Seiles sichtbar werden. Grad der gezeigten Schädigung ca. 50%.

Fig.4 zeigt das Seil 1, dessen Ummantelung einen fortgeschrittenen Verschleißzustand in einem Teilabschnitt von ca. 180° aufweist und die Litzen 4 des tragenden Seiles in diesem Teilabschnitt gut sichtbar sind. Grad der gezeigten Schädigung ca. 75%.

Fig.5 zeigt das Seil 1, dessen Ummantelung einen stark fortgeschrittenen Verschleißzustand über den gesamten Seilumfang (360°) aufweist. Der Mantel ist verschlissen und verschoben und die Litzen 4 des tragenden Seiles sind in diesem Teilabschnitt voll sichtbar. Grad der gezeigten Schädigung 100%.

Die Figuren 6 bis 9 zeigen eine Schädigung des Seils in Form von Einschnitten, die zu einem sich graduell ausbreitenden Schädigungsgrad führen.

Fig.6 zeigt das Seil 1 mit Ummantelung 2 und die Litzen 3 der Ummantelung in unterschiedlichen Farben. Grad der gezeigten Schädigung 0%.

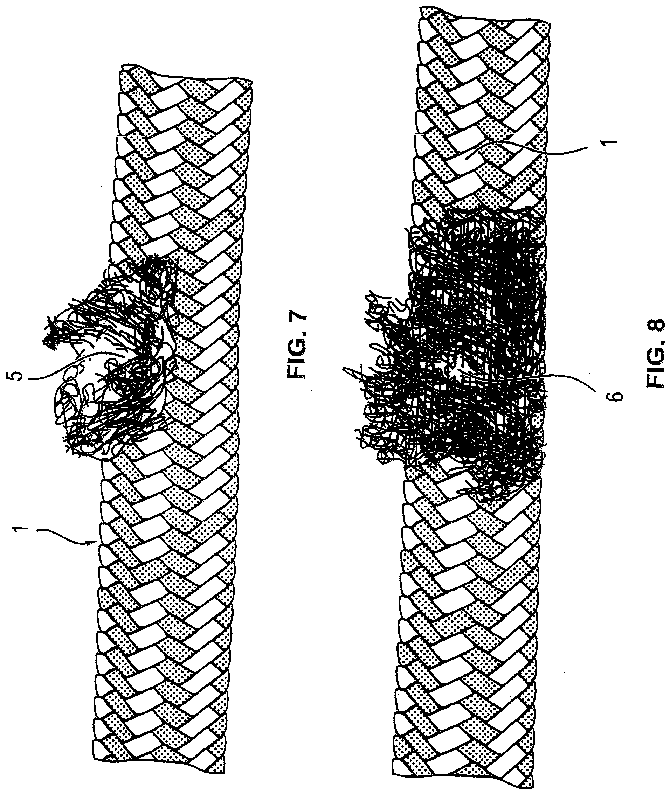

Fig.7 zeigt das Seil 1, dessen Ummantelung einen sichtbar leichten Einschnitt 5 aufweist. Grad der gezeigten Schädigung ca. 25%.

Fig.8 zeigt das Seil 1, dessen Ummantelung und eine Litze des tragenden Seiles einen sichtbaren Einschnitt 6 aufweisen. Grad der gezeigten Schädigung ca. 50%.

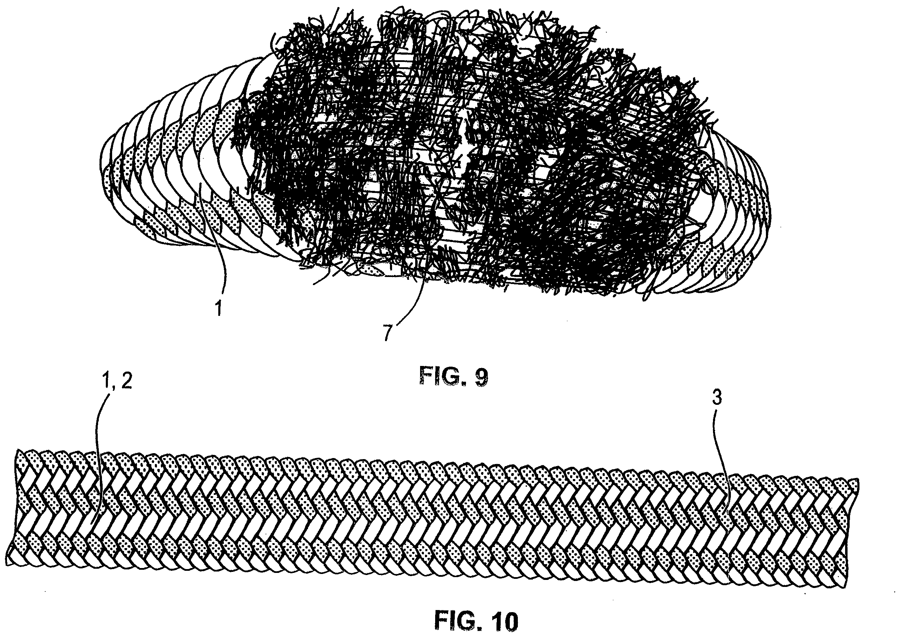

Fig.9 zeigt das Seil 1, dessen Ummantelung und mindestens eine Litze des tragenden Seiles einen sichtbaren Durchschnitt 7 aufweisen. Grad der gezeigten Schädigung 100%.

Die Figuren 10 bis 13 zeigen schließlich eine Schädigung des hochfesten Faserseils in Form von Quetschungen des Seiles.

Fig.10 zeigt das Seil 1 mit Ummantelung 2 und die Litzen 3 der Ummantelung in unterschiedlichen Farben. Grad der gezeigten Schädigung 0%.

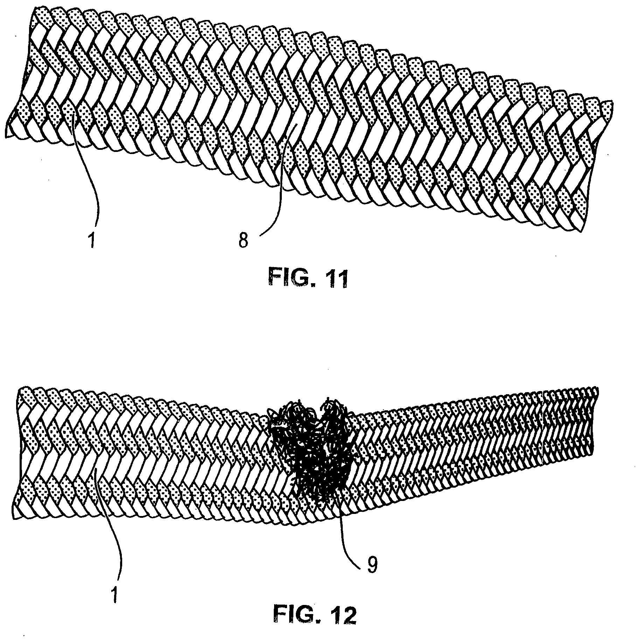

Fig.11 zeigt das Seil 1 mit einer leichten Quetschung 8 und Ovalisierung des Seilquerschnittes. Grad der gezeigten Schädigung ca. 25%.

Fig.12 zeigt das Seil 1 mit einer starken Quetschung 9 und einer starken Ovalisierung des Seilquerschnittes. Grad der gezeigten Schädigung ca. 50%.

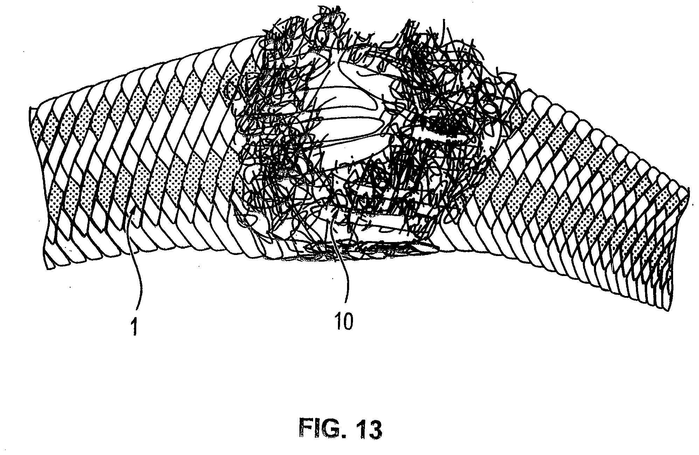

Fig.13 zeigt das Seil 1 mit einer so starken Quetschung 10, dass der Mantel offen ist und die beschädigten Litzen des tragenden Seiles austreten. Grad der gezeigten Schädigung 100%.

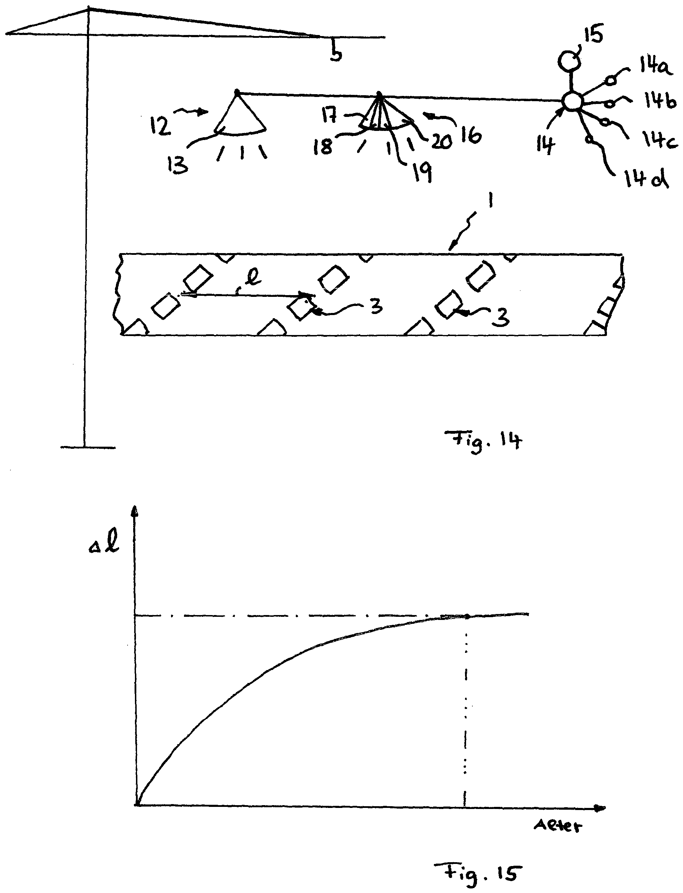

Fig. 14 zeigt die Vorrichtung zur Bestimmung der Ablegereife näher. Insbesondere wird mittels einer optischen Erfassungseinrichtung 12, beispielsweise einer Kamera 13 ein Ist-Bild des Seils erfasst werden, welches dann mittels einer automatischen oder halbautomatischen Auswerteeinrichtung umfassend eine Bildauswerteeinrichtung 14 optisch mit den in einem Referenzbildspeicher 15 gespeicherten Referenzdarstellungen verglichen wird, um im Ist-Bild zu sehende Schädigungen zu erfassen und einzukategorisieren.

Die Auswerteeinrichtung kann dann die einzelnen Schädigungen in der eingangs genannten Weise aufsummieren und ggfs. eine Ablegereifesignal abgeben. Wie Fig. 14 zeigt, kann die genannte Vorrichtung zum Erkennen der Ablegereife kann in ein Hebezeug, insbesondere in einen Kran 21 und dessen Kransteuerung integriert sein.

Wie Fig. 14 zeigt, kann die Bildauswerteeinrichtung 14 Konturauswertemittel 14a umfassen, die Seilverdickungen durch Aufspleißungen des Verschleißmantels und/oder Verdünnungen in Bereichen, in denen der Seilmantel 2 verschlissen ist und/oder fehlt, und/oder andere Konturveränderungen wie Wellungen, die gegenüber dem Sollzustand der Seilkontur auftreten, bestimmen können.

Ferner kann die Bildauswerteeinrichtung 14 Farbmuster-Auswertemittel 14b umfassen, die anhand eines Bildvergleichs Veränderungen des Farbmusters, das das Seil im aufgenommenen Bild zeigt, bestimmen und daraus die Ablegereife ermitteln kann.

Weiterhin kann die genannte Bildauswerteeinrichtung 14 auch Farbflächenanteil-Auswertemittel 14c umfassen, die in einem erfassten Bild des Seils 1 den Flächenanteil einer jeweiligen Farbe bestimmen können, den die Farbe in der Gesamtfläche des Seils 1 einnimmt. Ist beispielsweise der Verschleißmantel 2 des Seils 1 rot-weiß-grün gestreift, wobei die Streifenbreiten gleich groß sind, so dass jede Farbe ein Drittel der Gesamtfläche einnimmt, können die genannten Farbflächenanteil-Auswertemittel 14c ein Verschleißen der weißen Fasern oder Litzen und eine damit einhergehende Schädigung des Seils 1 bestimmen, wenn der Flächenanteil der genannten weißen Fasern bzw. Litzen vom Sollwert 33% auf beispielsweise weniger als 25% oder weniger als 15% abnimmt.

Die genannten Farbflächenanteil-Auswertemittel 14c können auch das Auftreten einer neuen Farbe und deren Flächenanteil bestimmen. Tritt beispielsweise der andersfarbige Seilkern 11 durch Verschleißen des Verschleißmantels 2 zutage, können beispielsweise schwarze Flecken in dem vorgenannten rot-weiß-grünen Farbmuster auftreten, so dass die Farbflächenanteil-Auswertemittel 14c eine Schädigung bestimmen können, wenn der Flächenanteil der schwarzen Flecken ein vorbestimmtes Maß überschreitet.

Die Bildauswerteeinrichtung 14 kann in vorteilhafter Weiterbildung der Erfindung auch Dehnungsauswertemittel 14d umfassen, die eine Dehnung Δl des hochfesten Faserseils 1 und/oder dessen Verschleißmantels 2 anhand eines Vergleichs des aktuellen Seilbilds mit einem gespeicherten Referenzbild bestimmen können. Insbesondere können die genannten Dehnungsauswertemittel 14d die Beabstandung I vorbestimmer Farbmuster- und/oder Pixelmusterstellen in Längsrichtung des Faserseils 1 voneinander und/oder in Querrichtung des Faserseils voneinander identifizieren und bestimmen, vgl. Fig. 14, und mit einem Sollwert, der aus dem Bild des Faserseils im Ursprungszustand oder Sollzustand bestimmt werden kann, und/oder einem bekannten Verlauf vergleichen, um eine Dehnung des Seils in Längsrichtung und/oder Querrichtung bestimmen zu können.

Fig. 15 zeigt schematisch - ohne auf den in Fig. 15 gezeigten, konkreten Kurvenverlauf beschränkt zu sein - einen Verlauf der Seildehnung Δl über der Alterung bzw.- Schädigung, so dass anhand eines solchen Verlaufs bei Bestimmen einer gewissen Seildehnung Δl auf die Ablegereife geschlossen werden kann.

Ist beispielsweise das Seil 1, insbesondere dessen Verschleißmantel 2, mit roten oder andersfarbigen Litzen 3 versehen, die beispielsweise spiralförmig im Mantel 2 eingearbeitet sein können, haben diese roten Fasern bzw. Litzen im Bild des Faserseils 1 einen vorbestimmten Abstand I voneinander. Erfährt das Seil durch Alterung und/oder Schädigung eine übermäßige Dehnung, schlägt sich dies in einer entsprechenden Abstandsvergrößerung Δl der roten Streifen nieder, anhand derer die Ablegereife bzw. Schädigung erkannt werden kann, vgl. Fig. 14 und 15.

Die Erfassungseinrichtung 12 zum Erfassen des Ist-Zustandes des hochfesten Faserseils 1 kann auch eine Sensorik 16 zum sensorischen Erfassen des Ist-Zustandes des Seilkerns 11 und/oder des Seilmantels 2 aufweisen, um ggf. alternativ oder zusätzlich zur optischen Erfassung des Zustands des Verschleißmantels 2 den Ist-Zustand des Seilkerns 11 und/oder des Seilmantels 2 in anderer Weise erfassen zu können. Diese Sensorik 16 kann vorteilhafterweise mehrere Parameter des Seilkerns 11 und/oder des Seilmantels 2 bestimmen, um bei vorbestimmten Veränderungen eines oder mehrerer Seilkern- und/oder Seilmantel-Parameter eine Schädigung anzunehmen.

Beispielsweise kann die genannte Sensorik 16 einen optischen Reflexionssensor 17 aufweisen, der anhand der Reflexionen des Verschleißmantels 2 und/oder des Seilkerns 11 und/oder vorbestimmter Seilschichten die Beschaffenheit des Verschleißmantels und/oder des Seilkerns und/oder der Seilschicht bestimmen kann. Beispielsweise kann der Verschleißmantel und/oder der Seilkern und/oder eine bestimmte Seilschicht mit einer Reflexionsschicht versehen sein, die ein Sensorsignal reflektiert, so dass bei unbeschädigtem Seil ein vorbestimmtes Reflexionssignal am Sensor ankommt bzw. aufgenommen wird. Beispielsweise kann der Reflexionssensor 17 eine Lichtquelle umfassen, mittels derer das Seil 1 mit definierten Lichtverhältnissen bestrahlt werden kann, so dass ein entsprechendes Reflexionssignal hervorgerufen werden kann.

Zeigt dieses Reflexionssignal übermäßige oder charakteristische Änderungen, kann von einer Seilschädigung ausgegangen werden. Wird beispielsweise der Verschleißmantel 2 reflektierend beschichtet, kann von einer Seilschädigung ausgegangen werden, wenn das Reflexionssignal - bei verschlissenem Seilmantel 2 - ausbleibt bzw. an einer ausreichenden Anzahl von Stellen ausbleibt. In ähnlicher Weise kann bei einer reflektierenden Beschichtung des Seilkerns 11 davon ausgegangen werden, dass bei Auftreten eines Reflexionssignals der Verschleißmantel 2, der im unbeschädigten Zustand eine Reflexion verhindert, beschädigt ist.

Alternativ oder zusätzlich kann die genannte Sensorik 16 auch einen Ultraschallsensor 18 umfassen, der das hochfeste Faserseil 1 mit Ultraschall beaufschlagt und das zurückgeworfene Signal erfasst. Mittels eines solchen Ultraschallsensors 18 können auch tiefere Schichten des hochfesten Faserseils 1, insbesondere dessen Seilkern 11, ggf. aber auch dessen Verschleißmantel 2 überwacht werden, da sich das Ultraschallsignal bei Seilschädigungen, insbesondere bei einem Verschleiß des Verschleißmantels verändert.

Ferner kann auch ein Radarsensor 19 vorgesehen sein, der das hochfeste Faserseil 1 mit einem Radarsignal beaufschlagt und das zurückgeworfene Signal erfasst. Mittels eines solchen Radarsensors 19 können auch tiefere Schichten des hochfesten Faserseils 1, insbesondere dessen Seilkern 11, ggf. aber auch der Verschleißmantel 2 und deren Strukturen erfasst werden. Zeigen sich charakteristische Veränderungen des Radarasignals, kann von einer Schädigung des hochfesten Faserseils 1 ausgegangen werden.

Weiterhin kann die genannte Sensorik 16 auch einen kapazitiv arbeitenden Sensor 20 umfassen, der die dielektrischen Eigenschaften des Seilkerns 11 und/oder des Verschleißmantels 2 erfasst und deren Veränderungen bestimmen kann. Zeigen sich im Signal des kapazitiven Sensors 20 vorbestimmte Änderungen, die auf entsprechende Änderungen der dielektrischen Eigenschaften des Seilkerns 11 und/oder des Verschleißmantels 2 rückschließen lassen, kann von einer Seilschädigung ausgegangen werden.

## Patentansprüche

1. Vorrichtung zum Erkennen der Ablegereife eines hochfesten Faserseils (1), das einen Seilkern, der hochfeste Kunststofffasern oder -litzen (4) umfasst sowie eine den Seilkern (11) umgebende, verschleißanzeigende Ummantelung (2) besitzt, mit einem Referenzschädigungsspeicher, in dem Referenzdarstellungen des hochfesten Faserseils (1) mit verschiedenen Schädigungsgraden der Ummantelung (2) des hochfesten Faserseils (1) enthalten sind, anhand derer durch einen optischen Vergleich eines Ist-Bilds des hochfesten Faserseils mit den gespeicherten Referenzdarstellungen der Schädigungs- und/oder Verschleißgrad der Ummantelung bestimmbar ist, anhand derer die Ablegereife bestimmbar ist.

2. Vorrichtung nach dem vorhergehenden Anspruch, wobei eine optische Erfassungseinrichtung (12), insbesondere eine Kamera (13) zum Erfassen des Ist-Bilds des hochfesten Faserseils (1) vorgesehen ist.

3. Vorrichtung nach einem der vorhergehenden Ansprüche, wobei eine automatische oder halbautomatische Bildauswerteeinrichtung (14) zum optischen Vergleichen des Ist-Bilds des Faserseils (1) mit den gespeicherten Referenzdarstellungen und zum Einkategorisieren von im Ist-Bild zu sehenden Schädigungen vorgesehen ist.

4. Vorrichtung nach einem der vorhergehenden Ansprüche, wobei eine Auswerteeinrichtung (14) zum Aufsummieren von einzelnen Schädigungen zu einem Gesamtschädigungsgrad und Abgeben eines Ablegereifesignals bei Erreichen eines vorbestimmten Gesamtschädigungsgrades vorgesehen ist.

5. Vorrichtung nach einem der vorhergehenden Ansprüche, wobei die optische Erfassungseinrichtung (12) dazu ausgebildet ist, farbige Ist-Bilder des Faserseils (1) zu erfassen, wobei die Bildauswerteeinrichtung (14) dazu vorgesehen ist, Schädigungen des Faserseils anhand unterschiedlicher Farben, in denen die Kunststofffasern oder -litzen (4) des Faserseils (1) eingefärbt und/oder verschiedene Mantelschichten der Ummantelung (2) des Faserseils eingefärbt sind, zu erfassen und einzukategorisieren.

6. Vorrichtung nach einem der vorhergehenden Ansprüche, wobei die Bildauswerteeinrichtung (14) dazu vorgesehen ist, anhand der unterschiedlichen Farben, in der/denen einerseits die Ummantelung (2) eingefärbt ist und andererseits der Seilkern (11) eingefärbt ist, Schädigungen zu erfassen und einzukategorisieren.

7. Vorrichtung nach einem der vorhergehenden Ansprüche, wobei die Bildauswerteeinrichtung (14) dazu vorgesehen ist, anhand verschiedener Werkstoffe, aus denen Kunststofffasern zumindest einer Mantelschicht der Ummantelung (2) bestehen, Schädigungen zu erfassen und einzukategorisieren.

8. Vorrichtung nach einem der vorhergehenden Ansprüche, wobei die Bildauswerteeinrichtung (14) Konturauswertemittel (14a) zum Bestimmen von Konturveränderungen des Faserseils (1), insbesondere Seilverdickungen und/oder Seilverdünnungen und/oder Seiloberflächenwellungen, und Bestimmen der Ablegereife anhand solcher Konturveränderungen aufweist.

9. Vorrichtung nach einem der vorhergehenden Ansprüche, wobei die Bildauswerteeinrichtung (14) Farbmuster-Auswertemittel (14b) zum Bestimmen von Veränderungen des Farbmusters des Faserseils (1) und Bestimmen der Ablegereife anhand eines festgestellten, veränderten Farbmusters aufweist.

10. Vorrichtung nach einem der vorhergehenden Ansprüche, wobei die Bildauswerteeinrichtung (14) Farbflächenanteil-Auswertemittel (14c) zum Bestimmen des Flächenanteils einer Farbe im Bild des Faserseils (1) und Bestimmen der Ablegereife anhand des festgestellten Farbflächenanteils aufweist.

11. Vorrichtung nach einem der vorhergehenden Ansprüche, wobei die Bildauswerteeinrichtung (14) Dehnungs-Auswertemittel (14d) zum optischen Bestimmen der Beabstandung bestimmter Farbmuster- und/oder Pixelgruppenstellen im Bild des Faserseils (1) und Bestimmen einer Seildehnung anhand der festgestellten Beabstandung und schließlich Bestimmen einer Ablegereife anhand der festgestellten Seildehnung aufweist.

12. Vorrichtung nach einem der vorhergehenden Ansprüche, wobei die/eine optische Erfassungseinrichtung (12) einen optischen Reflexionssensor (17) zum Erfassen von Lichtreflexionen, die an einer Reflexionsschicht des Faserseils (1), insbesondere an dessen Ummantelung (2) und/oder dessen Seilkern (11) entstehen, aufweist.

13. Vorrichtung nach dem Oberbegriff des Anspruchs 1 oder einem der vorhergehenden Ansprüche, wobei eine Sensorik (16) zum sensorischen Erfassen von charakteristischen Parametern der Ummantelung (2) und/oder des Seilkerns (11) vorgesehen ist, welche Sensorik (16) zumindest einen der folgenden Sensoren umfasst:
- einen Ultraschallsensor (18) zum Beaufschlagen des Faserseils (1) mit Ultraschall,
- einen Radarsensor (19) zum Erfassen des Faserseils (1) mittels Radar,
- einen kapazitiven Sensor (20) zum kapazitiven Erfassen der dielektrischen Eigenschaften des Seilkerns (3) und/oder der Ummantelung (2).

14. Vorrichtung nach einem der vorhergehenden Ansprüche, wobei die Vorrichtung in ein Hebezeug integriert ist, das als Kran, insbesondere Turmkran und/oder Teleskopkran und/oder Hafenkran und/oder Schiffskran, ausgebildet ist und als Hubseil oder Abspannseil ein hochfestes Faserseil aufweist, das einen Seilkern (11), der hochfeste Kunststofffasern oder -litzen (4) umfasst, sowie eine den Seilkern (11) umgebende, verschleißanzeigende Ummantelung (2) besitzt.

15. Hebezeug, insbesondere Kran wie Turmkran und/oder Teleskopkran und/oder Hafenkran und/oder Schiffskran, mit einem hochfesten Faserseil (1) sowie einer Vorrichtung zum Erkennen der Ablegereife des hochfesten Faserseils, die gemäß einem der Ansprüche 1 bis 8 ausgebildet ist.

16. Hebezeug nach dem vorhergehenden Anspruch wobei das hochfeste Faserseil (1) ein Kranhubseil oder ein Kranauslegerabspannseil bildet.

## Claims

1. An apparatus for recognizing the replacement state of a high-strength fiber rope (1) that has a rope core that comprises high-strength plastic fibers or plastic strands (4) and that has a wear-indicating jacket (2) surrounding the rope core (11), having a reference damage store in which reference representations of the high-strength fiber rope (1) are contained with different degrees of damage to the jacket (2) of the high-strength fiber rope (1) with reference to which the degree of damage to and/or the degree of wear of the jacket can be determined by an optical comparison of an actual image of the high-strength fiber rope with the stored reference representations with reference to which degree of damage and/or degree of wear the replacement state can be determined.

2. An apparatus in accordance with the preceding claim, wherein an optical detection device (12), in particular a camera (13), is provided for detecting the actual image of the high-strength fiber rope (1).

3. An apparatus in accordance with one of the preceding claims, wherein an automatic or semiautomatic image evaluation device (14) is provided for the optical comparison of the actual image of the fiber rope (1) with the stored reference representations and for categorizing damage to be seen in the actual image.

4. An apparatus in accordance with one of the preceding claims, wherein an evaluation device (14) is provided for summing individual damage phenomena to form a total degree of damage and to output a replacement state signal on a reaching of a predefined total degree of damage.

5. An apparatus in accordance with one of the preceding claims, wherein the optical detection device (12) is configured to detect color actual images of the fiber rope (1), with the image evaluation device (14) being provided to detect and to categorize damage to the fiber rope with reference to different colors in which the plastic fibers or plastic strands (4) of the fiber rope (1) are dyed and/or in which different jacket layers of the jacket (2) of the fiber rope are dyed.

6. An apparatus in accordance with one of the preceding claims, wherein the image evaluation device (14) is provided to detect and to categorize damage with reference to the different colors in which, on the one hand, the jacket (2) is dyed and in which, on the other hand, the rope core (11) is dyed.

7. An apparatus in accordance with one of the preceding claims, wherein the image evaluation device (14) is provided to detect and to categorize damage with reference to different materials of which plastic fibers of at least one jacket layer of the jacket (2) are composed.

8. An apparatus in accordance with one of the preceding claims, wherein the image evaluation device (14) has contour evaluation means (14a) to determine contour changes of the fiber rope (1), in particular thickened rope portions and/or thinned rope portions and/or rope surface undulations and to determine the replacement state with reference to such contour changes.

9. An apparatus in accordance with one of the preceding claims, wherein the image evaluation device (14) has color pattern evaluation means (14b) to determine changes of the color pattern of the fiber rope (1) and to determine the replacement state with reference to a found changed color pattern.

10. An apparatus in accordance with one of the preceding claims, wherein the image evaluation device (14) has color surface ratio evaluation means (14c) to determine the surface ratio of a color in the image of the fiber rope (1) and to determine the replacement state with reference to the found color surface ratio.

11. An apparatus in accordance with one of the preceding claims, wherein the image evaluation device (14) has stretch evaluation means (14d) to optically determine the spacing of specific color pattern points and/or pixel group points in the image of the fiber rope (1) and to determine a rope stretching with reference to the found spacing and finally to determine a replacement state with reference to the found rope stretch.

12. An apparatus in accordance with one of the preceding claims, wherein the/an optical detection device (12) has an optical reflection sensor (17) to detect light reflections that arise at a reflective layer of the fiber rope (1), in particular at its jacket (2) and/or at its rope core (11).

13. An apparatus in accordance with the preamble of claim 1 or with one of the preceding claims, wherein a sensor system (16) is provided for the sensory detection of characteristic parameters of the jacket (2) and/or of the rope core (11), said sensor system (16) comprising at least one of the following sensors:
- an ultrasound sensor (18) for applying ultrasound to the fiber rope (1);
- a radar sensor (19) for detecting the fiber rope (1) by means of radar; and
- a capacitive sensor (20) for a capacitive detection of the dielectric properties of the rope core (3) and/or of the jacket (2).

14. An apparatus in accordance with one of the preceding claims, wherein the apparatus is integrated in lifting gear that is configured as a crane, in particular a tower crane and/or a telescopic crane and/or a harbor crane and/or a ship's crane and that has a high-strength fiber rope as the lifting rope or guying rope, said high-strength rope having a rope core (11) that comprises high-strength plastic fibers or plastic strands (4) and that has a wear-indicating jacket (2) surrounding the rope core (11).

15. Lifting gear, in particular a crane such as a tower crane and/or a telescopic crane and/or a harbor crane and/or a ship's crane, having a high-strength fiber rope (1) and having an apparatus for recognizing the replacement state of the high-strength fiber rope, said apparatus being configured in accordance with one of the claims 1 to 8.

16. Lifting gear in accordance with the preceding claim, wherein the high-strength fiber rope (1) forms a crane lifting rope or a crane boom guying rope.

## Revendications

1. Dispositif de détection d'un état d'usure limite d'un câble de fibres à haute résistance (1), qui possède une âme de câble, qui comprend des fibres ou torons en matière plastique (4) à haute résistance, ainsi qu'une gaine (2) entourant l'âme de câble (11) et indiquant l'usure, comprenant une unité de stockage d'endommagements de référence, dans laquelle se trouvent des représentations de référence du câble de fibres à haute résistance (1) avec différents degrés d'endommagement de la gaine (2) du câble de fibres à haute résistance (1), au moyen desquelles il est possible de déterminer, par une comparaison optique d'une image réelle du câble de fibres à haute résistance avec les représentations de référence enregistrées, le degré d'endommagement et/ou d'usure de la gaine, au moyen de laquelle l'état d'usure limite peut être déterminé.

2. Dispositif selon la revendication précédente, dans lequel
un équipement d'acquisition optique (12), en particulier une caméra (13), est prévu pour acquérir l'image réelle du câble de fibres à haute résistance (1).

3. Dispositif selon l'une des revendications précédentes, dans lequel
un équipement d'évaluation d'image (14) automatique ou semi-automatique est prévu pour la comparaison optique de l'image réelle du câble de fibres (1) avec les représentations de référence enregistrées et pour la catégorisation d'endommagements visibles dans l'image réelle.

4. Dispositif selon l'une des revendications précédentes, dans lequel
un équipement d'évaluation (14) est prévu pour additionner des endommagements individuels afin d'obtenir un degré d'endommagement total et pour émettre un signal d'état d'usure limite lorsqu'un degré d'endommagement total prédéfini est atteint.

5. Dispositif selon l'une des revendications précédentes, dans lequel
l'équipement d'acquisition optique (12) est conçu pour acquérir des images réelles en couleur du câble de fibres (1), l'équipement d'évaluation d'image (14) étant prévu pour détecter et catégoriser des endommagements du câble de fibres au moyen de différentes couleurs, dans lesquelles les fibres ou torons en matière plastique (4) du câble de fibres (1) sont colorés et/ou différentes couches d'enveloppe de la gaine (2) du câble de fibres sont colorées.

6. Dispositif selon l'une des revendications précédentes, dans lequel
l'équipement d'évaluation d'image (14) est prévu pour détecter et catégoriser des endommagements, au moyen des différentes couleurs, dans laquelle/lesquelles d'une part la gaine (2) est colorée et d'autre part l'âme de câble (14) est colorée.

7. Dispositif selon l'une des revendications précédentes, dans lequel
l'équipement d'évaluation d'image (14) est prévu pour détecter et catégoriser des endommagements, au moyen de différents matériaux, dont se composent des fibres en matière plastique d'au moins une couche d'enveloppe de la gaine (2).

8. Dispositif selon l'une des revendications précédentes, dans lequel
l'équipement d'évaluation d'image (14) comporte des moyens d'évaluation de contour (14a) pour déterminer des modifications de contour du câble de fibres (1), en particulier des épaississements de câble et/ou des amincissements de câble et/ou des ondulations de la surface de câble, et pour déterminer l'état d'usure limite au moyen de modifications de contour de ce type.

9. Dispositif selon l'une des revendications précédentes, dans lequel
l'équipement d'évaluation d'image (14) comporte des moyens d'évaluation de motif de couleur (14b) pour déterminer des modifications du motif de couleur du câble de fibres (1) et pour déterminer l'état d'usure limite au moyen d'un motif de couleur modifié constaté.

10. Dispositif selon l'une des revendications précédentes, dans lequel
l'équipement d'évaluation d'image (14) comporte des moyens d'évaluation de proportion de surface de couleur (14c) pour déterminer la proportion de surface d'une couleur dans l'image du câble de fibres (1) et pour déterminer l'état d'usure limite au moyen de la proportion de surface de couleur constatée.

11. Dispositif selon l'une des revendications précédentes, dans lequel
l'équipement d'évaluation d'image (14) comporte des moyens d'évaluation d'allongement (14d) pour la détermination optique de l'espacement entre des zones de motif de couleur et/ou de groupes de pixels définies dans l'image du câble de fibres (1) et la détermination d'un allongement de câble au moyen de l'espacement constaté et enfin la détermination d'un état d'usure limite au moyen de l'allongement de câble constaté.

12. Dispositif selon l'une des revendications précédentes, dans lequel
le/un équipement d'acquisition optique (12) comporte un capteur optique de réflexion (17) destiné à détecter des réflexions de la lumière, qui se produisent sur une couche de réflexion du câble de fibres (1), en particulier sur sa gaine (2) et/ou son âme de câble (11).

13. Dispositif selon le préambule de la revendication 1 ou l'une des revendications précédentes, dans lequel
un système de capteurs (16) est prévu pour la détection sensorielle de paramètres caractéristiques de la gaine (2) et/ou de l'âme de câble (11), ledit système de capteurs (16) comprenant au moins un des capteurs suivants :
- un capteur à ultrasons (18) pour soumettre le câble de fibres (1) à des ultrasons,
- un capteur radar (19) pour détecter le câble de fibres (1) par radar,
- un capteur capacitif (20) pour la détection capacitive des propriétés diélectriques de l'âme de câble (3) et/ou de la gaine (2).

14. Dispositif selon l'une des revendications précédentes, dans lequel
le dispositif est intégré dans un engin de levage, qui se présente sous la forme d'une grue, en particulier d'une grue à tour et/ou d'une grue télescopique et/ou d'une grue de port et/ou d'une grue de navire, et qui comporte, comme câble de levage ou câble de haubanage, un câble de fibres à haute résistance, qui possède une âme de câble (11), qui comprend des fibres ou torons en matière plastique (4) à haute résistance, ainsi qu'une gaine (2) entourant l'âme de câble (11) et indiquant l'usure.

15. Engin de levage, en particulier grue telle qu'une grue à tour et/ou une grue télescopique et/ou une grue de port et/ou une grue de navire, comprenant un câble de fibres à haute résistance (1) ainsi qu'un dispositif de détection de l'état d'usure limite du câble de fibres à haute résistance, qui est réalisé selon l'une des revendications 1 à 8.

16. Engin de levage selon la revendication précédente, dans lequel
le câble de fibres à haute résistance (1) forme un câble de levage de grue ou un câble de haubanage de flèche de grue.
